# EUROPEAN PATENT SPECIFICATION

(11) **EP 1 538 402 B1**
(45) Date of publication and mention of the grant of the patent: **26.07.2006**
(21) Application number: 03380281.0
(22) Date of filing: 04.12.2003
(51) Int. Cl.: F24J 2/04

(54) **Solar collector integrated in a facade**
In einer Fassade integrierter Sonnenkollektor
Capteur solaire intégré dans une façade

(43) Date of publication of application: 08.06.2005
(73) Proprietor: British Robertson, S.L.U., 08400 Granollers (Barcelona) (ES)
(72) Inventor: Sen Tato, Fernando, 08400 Granollers (ES)
(74) Representative: Esteban Perez-Serrano, Maria Isabel

(56) References cited:
- EP-A- 0 005 110
- EP-A- 0 039 401
- WO-A-02/04873
- DE-U- 9 307 307
- FR-A- 2 709 319
- GB-A- 2 054 004
- GB-A- 2 273 151

## Description

### OBJECT OF THE INVENTION

The object of the present invention is a solar collector integrated in the facade that allows solar heat to be trapped irradiated using media positioned directly on the facade, forming part of it. The facades referred to are prefabricated facades, but in any case their characteristics are not limiting for the invention.

The present invention is characterised by the special constructive characteristics of the collector that make it valid for use as a surfacing or sealing element for facades so it fulfils a double function as a facade sealing element as well as a means of trapping of the heat of solar radiation.

Therefore the present invention is encompassed both within the ambit of the facade sealing media as well as solar radiation collectors.

### BACKGROUND TO THE INVENTION

At present there are great numbers of means for trapping solar energy, whether positioned as surfacing or as solar panels positioned in given locations.

Even though in principle these means of trapping the heat of the solar radiation can be placed anywhere, the existence of solar collectors that fulfil a double function, the actual function intrinsic to their nature, and another function as sealing of facades and similar, is unknown.

On the other hand in buildings it is common to find situations in which, due to the orientation of the construction there are parts that directly receive the solar radiation and are therefore warmer whereas other parts of the building with opposite orientation do not receive any solar radiation, and therefore are colder depending on the design conditions of the building heating system, its heating can work or not, in some cases the heat introduced being excessive, or on the contrary the thermal sensation in some parts of the building is that of cold.

With the present invention of a solar collector integrated in a facade it is hoped to achieve that the thermal differences existing in buildings, due to their own orientation, are not so notable, obtaining an almost immediate thermal balance within the building, due to the use of the solar collectors integrated in the facade that are the subject of the invention.

Therefore, the object of the present invention is that of overcoming the previous disadvantages, developing a solar collector that in addition to being capable of trapping the heat of solar radiation, also serves as a means of sealing, achieving, with the collectors interconnectly positioned, that within the interior building space thermal uniformity exists and is achieved, notable gradients not existing.
It is know from the State of the art the invention EP 005110 where is disclosed a façade of a building provided with at least one solar collector for heating the rooms of a building. The building frontage comprises an external glass wall, and an internal wall, which comprises breastwork panels, glazing, and between the external and internal panels at least one air solar energy collector is housed. This system uses the air as transfer fluid which implies some openings to take air and to discharge it after passing over the solar energy collector.
DE-U-9307307 discloses a facade having a solar collector using liquid as a heat transfer fluid, placed in between an inner and an outer glazing.

### DESCRIPTION OF THE INVENTION

The solar collector integrated in the facade, object of the present invention, consists of a collector comprised of a series of adjacently positioned sections formed by a flat part onto which the solar radiation directly falls, and onto which the pipes of the fluid that is heated are attached, these pipes being joined with each other forming a single pipe.

This collector assembly is positioned in a facade especially designed to hold said collector; the facade having exterior glazing, an air chamber and then another double glazing with parts in which the solar radiation collectors are positioned.

In the space formed between the exterior and the interior glazing, that is, in the air chamber, it is possible to house an insulating blind with the aim of covering the collector, and avoiding heat accumulation.

In front of the collector transparent insulation can be placed with the aim of allowing the solar radiation to pass and avoiding heat loss to the air chamber, such as happens in case of ventilated walls. In addition to the insulation previously mentioned glazing can optionally also be placed.

The collectors integrated in the facade are connected between each other every given number or distance, in turn being connected with an exchanger, both sharing the same fluid, and the heat transfers from the exchanger to a heat reservoir through an independent circuit, where the hot water is stored awaiting use.

As is observed, the circuit formed by the collector pipes and the pipes placed inside the exchangers is one, transmitting the heat held in this fluid by contact and conduction to the fluid that later will be stored in the reservoirs awaiting use. The fact of using different fluids avoids that the hot water to be used passes through all of pipes.

### DESCRIPTION OF THE DRAWINGS

To supplement the description that will be carried out below and with the aim of leading to a better understanding of its characteristics, this descriptive report is accompanied by a set of drawings in whose figures, in an illustrative and non-limiting way, the most significant details of the invention have been represented.

Figure 1 shows a schematic and partially sectioned representation of the facade where the solar collector has been integrally positioned.

Figure 2 shows a detail of each of the sections that form the solar collectors.

### PREFERABLE EMBODIMENT OF THE INVENTION

In the light of the figures a preferred means of embodiment of the invention proposed is described below.

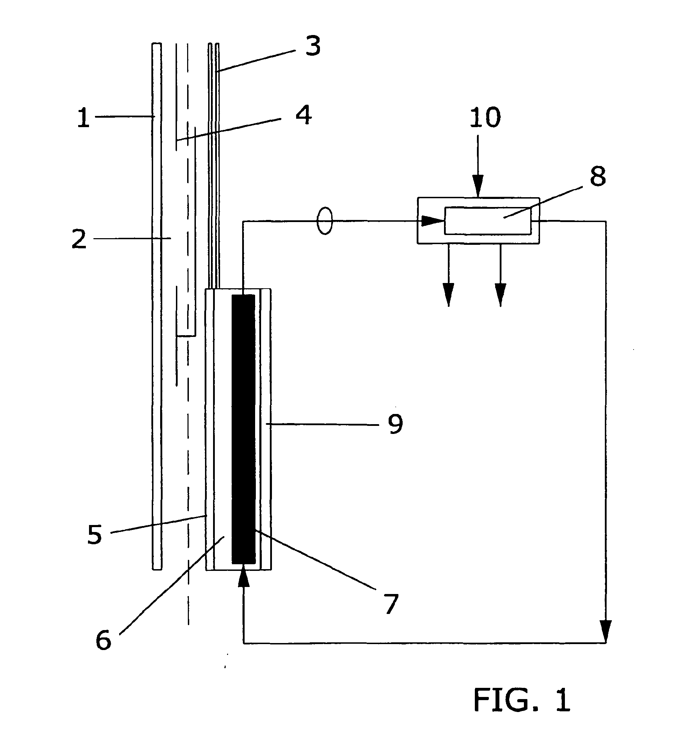

In Figure 1 we see that the solar collector (7) is integrally positioned in a facade that has exterior glazing (1), next there is an air chamber (2), and after this there is double-glazing (3).

In those areas in which it is required to place the solar collector, the internal glazing is cut back or not put in place, the solar collector (7) being directly positioned, that is the internal part of the sealing is formed by the supplementary positioning of double glazing and the solar collectors.

The collectors (7) can be covered in their outer face by a insulating transparent sheet (6), and in addition can also have optional glazing or protection (5), whose function, along with the previous sheet is both that of allowing the solar radiation to pass and that of acting as insulation, since the air circulates through said air chamber (2) on some occasions, which is known as a ventilated wall, being prejudicial for the ends that are sought.

The collectors (7) are covered in their inner face by insulation (9), with the aim of avoiding the dissipation of heat accumulated in the transmission fluid. Insulation that in turn serves to insulate the actual building.

Also inside the air chamber (2) a system of flaps, to regulate the air flow, as well as a blind (4), moveable by any known system, are placed; the purpose of the latter is for it to be moveable with the aim of covering the collector (7) to avoid the falling of the solar rays on it, as well as that of protecting the areas of vision.

The collectors (7) are interconnected between themselves and every given number of them or even individually are connected to an exchanger, forming a single circuit that shares the same fluid.

In Figure 1 we see how next to the collector (7) there is a partial reservoir (8) from where the hot fluid is taken to an exchanger (10), from where the exchange of heat from the collector (7) fluid to the hot sanitary or heating water takes place, that then is used directly or stored awaiting use.

The grouping of collectors connected to exchangers and these to a number of reservoirs can be varied. Furthermore, thanks to a system of valves placed on the hydraulic circuit that connects all the exchangers certain areas can be isolated or connected with others, depending on the need for heating that we require. Thus, for example when, in the mornings, the solar radiation falls directly on a certain facade, logically this part is at a higher temperature than the facade on which the solar radiation does not fall, because of which it is clearly advantageous to interconnect the collectors of one facade with another, achieving a redistribution and homogeneity of the inside temperature of the building by putting the collectors of one facade in contact with others, since heat flow exists from the collectors to the internal areas of the building through the actual facade or through a radiating floor.

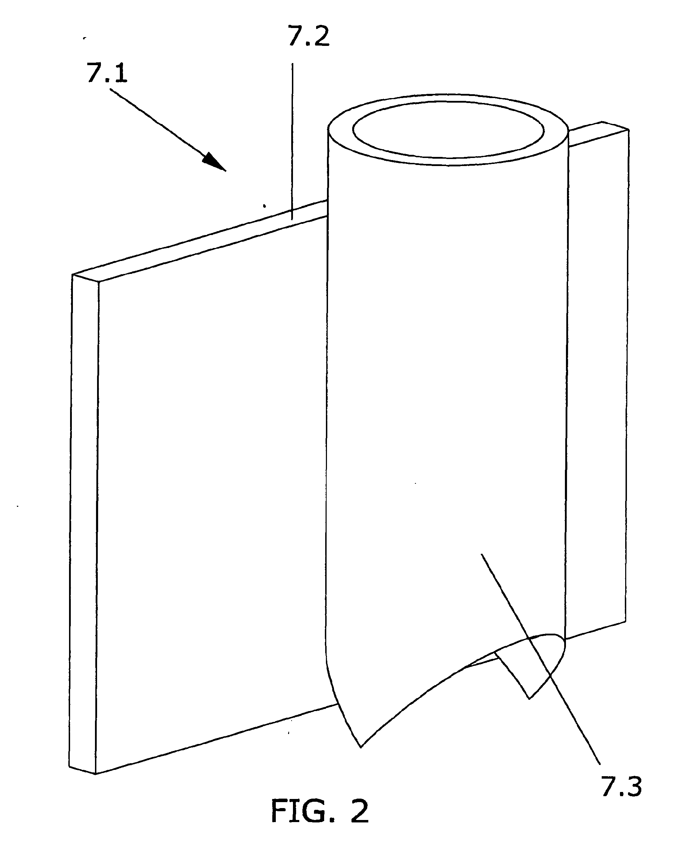

In Figure 2, the constructive characteristics of a possible means of embodiment of the sections (7.1) that form the collectors (7) are shown. These sections have a flat part (7.1) onto which the solar radiation directly falls, and on which a pipe (7.2) is continuously attached, through whose interior the heating fluid passes.

Variations in materials, shapes, size and layout of the component parts, described in non-limiting way, do not alter the essential nature of this invention, this being sufficient for its reproduction by an expert.

## Claims

1. Façade with a solar collector (7) integrated in it and comprising:
- A façade comprising
o An external face with glazing (1),
o An internal air chamber (2)
o An internal face with glazing (3), and
- at least one solar collector (7) using liquid as a heat transfer fluid, **characterized in that** the internal face (3) consists of double glazing in which the solar collector (7) is integrated.

2. Façade with solar collector (7) integrated in it according to claim 1, **characterized in that** the solar collector(s) (7) are connected to a heat exchanger (10) wherein the transfer of heat from the fluid which circulates within the solar collector(s) (7) to water stored in a reservoir (8) takes place.

3. Façade with solar collector (7) integrated in it according to claim 1, **characterized in that** in the internal air chamber (2) there is a system of flaps for regulating the air flow, and a blind (4) that is activated by whatever means, covering the collectors (7) with the purpose that they do not receive the solar radiation.

4. Façade with solar collector (7) integrated in it according to claim 1, **characterized in that** the solar collector (7) has on its side facing the air chamber (2), a transparent insulating sheet (6) placed, achieving a greater insulation of the collector (7) without preventing the reception of the solar radiation.

5. Façade with solar collector integrated in it according to claim 1, **characterized in that** the solar collectors (7), are used as heating of the building by means of radiant floor by being coupled to a heat exchanger (10) and a reservoir (8).

6. Façade with solar collector (7) integrated in it according to claim 1, **characterized in that** the collectors have flat part (7.2) with one face directly exposed to the solar radiation, while in the other face a piping (7.3) through which the transfer fluid circulates is placed in direct contact with the flat part (7.2).

## Patentansprüche

1. Fassade mit einem in ihr integrierten Sonnenkollektor (7) und folgendes umfassend:
- Eine Fassade, die umfasst
◆ Eine Aussenseite mit Verglasung (1)
◆ Eine innere Luftkammer (2)
◆ Eine Innenseite mit Verglasung (3) und
- wenigstens ein Sonnenkollektor (7), der Flüssigkeit als Wärmeübertragungsmittel verwendet, **dadurch gekennzeichnet, dass** die Innenseite aus Doppelverglasung besteht, in die der Sonnenkollektor (7) integriert ist.

2. Fassade mit einem in ihr integrierten Sonnenkollektor (7) gemäss Anspruch 1, **dadurch gekennzeichnet, dass** der Sonnenkollektor/die Sonnenkollektoren (7) an einen Wärmeaustauscher (10) angeschlossen sind, in dem die Übertragung der Wärme auf die Flüssigkeit stattfindet, die in dem Sonnenkollektor/den Sonnenkollektoren (7) zirkuliert, auf Wasser, das in einem Tank (8) gelagert wird.

3. Fassade mit einem in ihr integrierten Sonnenkollektor (7) gemäss Anspruch 1, **dadurch gekennzeichnet, dass** die innere Luftkammer (2) über ein Klappensystem verfügt zur Regulierung des Luftstroms und eine Abdeckung (4), die durch irgendwelche Mittel aktiviert wird und die Kollektoren (7) bedeckt mit dem Zweck, dass diese keine Sohneneinstrahlung erhalten.

4. Fassade mit einem in ihr integrierten Sonnenkollektor (7) gemäss Anspruch 1, **dadurch gekennzeichnet, dass** der Sonnenkollektor (7) auf der Seite, die der Luftkammer (2) zugewandt ist, über ein transparentes Isolatierungsblatt (6) verfügt, wodurch eine höhere Isolierung des Kollektors (7) erzielt wird, ohne die Aufnahme von Sonnenstrahlung zu verhindern.

5. Fassade mit einem in ihr integrierten Sonnenkollektor (7) gemäss Anspruch 1, **dadurch gekennzeichnet, dass** der Sonnekollektor (7) verwendet wird, um das Gebäude durch Fussbodenheizung zu beheizen, indem er an einen Wärmeaustauscher (10) und einen Tank (8) angeschlossen ist.

6. Fassade mit einem in ihr integrierten Sonnenkollektor (7) gemäss Anspruch 1, **dadurch gekennzeichnet, dass** die Kollektoren einen flachen Teil (7.2) haben, dessen eine Seite direkt der Sonneneinstrahlung ausgesetzt ist und die andere Seite ein Rohr ist, durch das die Übertragungsflüssigkeit in direkten Kontakt mit dem flachen Teil (7.2) gebracht wird.

## Revendications

1. Façade avec un collecteur solaire (7) intégré en elle et comprenant :
- une façade qui comprend :
• une face externe avec vitrage (1)
• une chambre à air externe (2)
• une face interne avec vitrage (3), et
- au moins un collecteur solaire (7) qui utilise du liquide en guise de fluide de transfert thermique, **caractérisé en ce que** la face interne (3) consiste en un double vitrage dans lequel le collecteur solaire (7) est intégré.

2. Façade avec collecteur (7) intégré en elle selon la revendication 1, **caractérisée en ce que** le (les) collecteur(s) solaire(s) (7) sont connectés à un échangeur de chaleur (10), dans lequel a lieu le transfert de chaleur à partir du fluide qui circule à l'intérieur du (des) collecteurs solaires (7) jusqu'à l'eau stockée dans un réservoir (8).

3. Façade avec collecteur (7) intégré en elle selon la revendication 1, **caractérisée en ce que** dans la chambre à air interne (2) il y a un système de volets pour réguler le débit d'air, et une persienne (4) qui est activée par un moyen quelconque, couvrant le collecteur (7) pour qu'ils ne reçoivent pas le rayonnement solaire.

4. Façade avec collecteur (7) intégré en elle selon la revendication 1, **caractérisée en ce que** le collecteur solaire (7) a sur son côté en regard de la chambre à air (2), une feuille isolante transparente (6) mise en place, qui réalise une plus grande isolation du collecteur (7) sans prévenir la réception du rayonnement solaire.

5. Façade avec collecteur (7) intégré en elle selon la revendication 1, **caractérisée en ce que** les collecteurs solaires (7) sont utilisés comme chauffage de bâtiment au moyen de plancher radiant, en s'accouplant à un échangeur de chaleur (10) et à un réservoir (8).

6. Façade avec collecteur (7) intégré en elle selon la revendication 1, **caractérisée en ce que** les collecteurs solaires (7) ont une partie de volet (7.2) avec une face directement exposée ù rayonnement solaire, tandis que dans l'autre face une tuyauterie (7.3) à travers laquelle circule le fluide de transfert est mise en pace en contact direct avec la partie de volet (7.2).
